# EUROPEAN PATENT APPLICATION

(11) **EP 4 510 550 A1**
(43) Date of publication of application: **19.02.2025**
(21) Application number: 23852697.4
(22) Date of filing: 05.06.2023
(51) Int. Cl.: H04M 1/72454, H04M 1/02, H04M 1/72403, G06F 3/0484, G06F 3/041

(54) **ELECTRONIC DEVICE FOR PROCESSING INPUT FOR MULTIPLE WINDOWS**

(30) Priority: 08.08.2022 KR 20220098475; 08.09.2022 KR 20220114103
(71) Applicant: Samsung Electronics Co., Ltd., Suwon-si, Gyeonggi-do 16677 (KR)
(72) Inventor: LEE, Kwanghyeon, Suwon-si Gyeonggi-do 16677 (KR); KIM, Jihyun, Suwon-si Gyeonggi-do 16677 (KR); PARK, Jeongmin, Suwon-si Gyeonggi-do 16677 (KR)
(74) Representative: Gulde & Partner
(86) International application number: PCT/KR2023/007718
(87) International publication number: WO 2024/034810

(57) **Abstract**

A processor of an electronic device may be configured to display a first window having a first size via a display area of a flexible display of the electronic device. The processor may be configured to, while the first window having the first size is being displayed, identify a change in an angle between a first housing of the electronic device and a second housing of the electronic device via at least one sensor of the electronic device, wherein the change in the angle is greater than a threshold angle. The processor may be configured to maintain the display of the first window having the first size on the basis of the change in the angle performed for a first time period which is equal to a reference time or longer than the reference time. The processor may be configured to display, via the display area, the first window having a second size smaller than the first size and a second window related to the first window, on the basis of the change in the angle performed for a second time period which is shorter than the reference time.

## Description

### [Technical Field]

The following descriptions relate to an electronic device for processing an input for multiple windows.

### [Background Art]

An electronic device may support multiple windows. For example, the electronic device may display, while displaying a first window through a display of the electronic device, a second window via the display.

### [Disclosure]

### [Technical Solution]

An electronic device is provided. The electronic device may comprise a first housing. The electronic device may comprise a hinge structure. The electronic device may comprise a second housing rotatable with respect to the first housing via the hinge structure. The electronic device may comprise a flexible display comprising a display area, which includes a first display area on the first housing and a second display area on the second housing extending from the first display area and rotatable with respect to the first display area according to a rotation of the second housing. The electronic device may comprise at least one sensor. The electronic device may comprise a processor. The electronic device may be configured to display, via the display area, a first window having a first size. The electronic device may be configured to, while the first window having the first size is displayed, identify, via the at least one sensor, change of an angle between the first housing and the second housing, the change of the angle larger than a threshold angle. The electronic device may be configured to maintain displaying the first window having the first size, based on the change of the angle performed during a first time duration longer than or equal to a reference time duration. The electronic device may be configured to display, via the display area, the first window having a second size smaller than the first size and a second window associated with the first window, based on the change of the angle performed during a second time duration shorter than the reference time duration.

A method for an electronic device comprising a first housing, a second housing rotatable with respect to the first housing, a flexible display, and at least one sensor is provided. The method may comprise displaying, via a display area, a first window having a first size. The method may comprise, while the first window having the first size is displayed, identifying, via the at least one sensor, change of an angle between the first housing and the second housing, the change of the angle larger than a threshold angle. The method may comprise, based on the change of the angle performed during a first time duration longer than or equal to a reference time duration, maintaining displaying the first window having the first size. The method may comprise, based on the change of the angle performed during a second time duration shorter than the reference time duration, displaying, via the display area, the first window having a second size smaller than the first size and a second window associated with the first window.

A non-transitory computer-readable storage medium storing one or more programs is provided. The one or more programs may comprise instructions which, when executed by a processor of an electronic device including a first housing, a second housing rotatable with respect to the first housing, a flexible display, and at least one sensor, cause the electronic device to display, via a display area, a first window having a first size. The one or more programs may comprise instructions which, when executed by the processor, cause the electronic device to, while the first window having the first size is displayed, identify, via the at least one sensor, change of an angle between the first housing and the second housing, the change of the angle larger than a threshold angle. The one or more programs may comprise instructions which, when executed by the processor, cause the electronic device to maintain displaying the first window having the first size, based on the change of the angle performed during a first time duration longer than or equal to a reference time duration. The one or more programs may comprise instructions which, when executed by the processor, cause the electronic device to, display, via the display area, the first window having a second size smaller than the first size and a second window associated with the first window, based on the change of the angle performed during a second time duration shorter than the reference time duration.

### [Description of the Drawings]

FIG. 1A is a simplified block diagram of an exemplary electronic device.
FIG. 1B illustrates an example of a position of at least one sensor in an exemplary electronic device.
FIGS. 2, 3, 4, 5, and 6 illustrate an example of a state of an exemplary electronic device.
FIG. 7 is a flowchart illustrating an exemplary method of displaying a first window and a second window based on a change of an angle between a first housing and a second housing.
FIG. 8 illustrates an example of a change of an angle between a first housing and a second housing.
FIG. 9 illustrates an example of a first window and a second window.
FIG. 10 illustrates examples of a second window of various types.
FIG. 11 is a flowchart illustrating an exemplary method of displaying a first window and a second window based on a posture of a first housing.
FIG. 12A is a flowchart illustrating an exemplary method of displaying a first window and a second window based on a touch input.
FIG. 12B illustrates an example of a second window displayed based on a touch input.
FIG. 13 is a flowchart illustrating an exemplary method of displaying a first window and a second window based on whether a content of determined type is included in the first window.
FIG. 14 is a flowchart illustrating an exemplary method of displaying a third window according to whether an additional window is displayable.
FIG. 15 illustrates an example of a third window that is an additional window.
FIG. 16 is a flowchart illustrating an exemplary method of displaying a first window and a second window according to a change in a state of an exemplary electronic device.
FIG. 17 illustrates an example of a first window displayed according to a change in a state of an exemplary electronic device.
FIG. 18 is a block diagram of an electronic device in a network environment according to various embodiments.

### [Mode for Invention]

An electronic device may be a portable device. For example, since the electronic device is the portable device, the electronic device may provide an environment (or execution environment) more suitably configured for a single window. For example, the number of inputs for displaying an additional window may be increased in the environment.

An electronic device represented through the following descriptions may display an additional window through a simplified input. For example, the electronic device may reduce the amount of computation to process inputs received to display multiple windows.

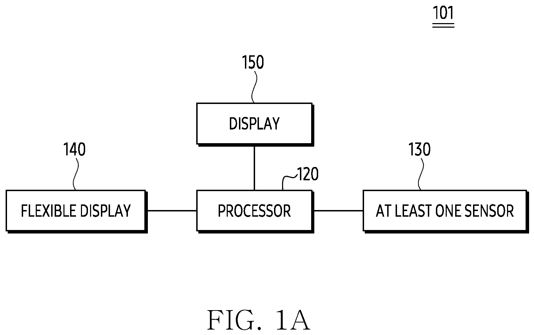

FIG. 1A is a simplified block diagram of an exemplary electronic device.

Referring to FIG. 1A, an electronic device 101 may include a processor 120, at least one sensor 130, and a flexible display 140. For example, the electronic device 101 may further include a display 150.

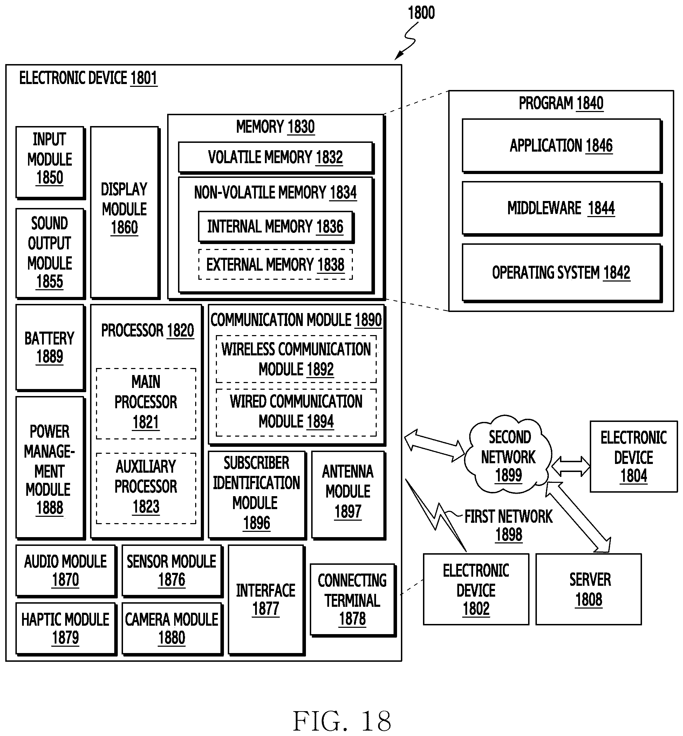

For example, the electronic device 101 may include at least a portion of an electronic device 1801 in FIG. 18 to be illustrated below. For example, the processor 120 may include at least a portion of a processor 1820 in FIG. 18 to be illustrated below. For example, the at least one sensor 130 may include at least a portion of a sensor module 1876 in FIG. 18. For example, the flexible display 140 and/or the display 150 may include at least a portion of a display module 1860 in FIG. 18. However, it is not limited thereto.

For example, the processor 120 may execute operations to be illustrated below by controlling the at least one sensor 130, the flexible display 140, and/or the display 150.

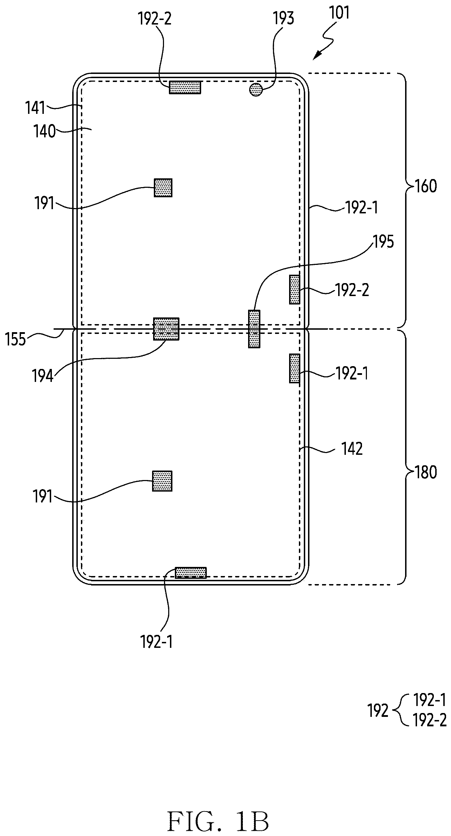

For example, the at least one sensor 130 may be used to identify a state of the electronic device 101. For example, the at least one sensor 130 may be used to identify a posture of the electronic device 101. For example, the at least one sensor 130 may include a hall sensor, an inertial sensor, an angle sensor, a proximity sensor, and/or a stretch sensor. For example, the at least one sensor 130 may be disposed in the electronic device 101 to identify the state and/or the posture. A position of the at least one sensor 130 in the electronic device 101 may be exemplified through FIG. 1B.

FIG. 1B illustrates an example of a position of at least one sensor in an exemplary electronic device.

Referring to FIG. 1B, an electronic device 101 may include a first housing 160 and a second housing 180. Although not shown in FIG. 1B, the electronic device 101 may include a hinge structure. For example, the second housing 180 may be rotatable with respect to the first housing 160 through the hinge structure, based on an axis 155.

For example, the electronic device 101 may include a flexible display 140 including a display area that includes a first display area 141 on the first housing 160 and a second display area 142 on the second housing 180. For example, the second display area 142 may extend from the first display area 141. For example, the second display area 142 may be rotatable with respect to the first display area 141 according to a rotation of the second housing 180.

For example, the at least one sensor 130 may include an inertial sensor 191. For example, the inertial sensor 191 may be included in each of the first housing 160 and the second housing 180. For example, the inertial sensor 191 may be used to identify a state of the electronic device 101 to be illustrated below. For example, the inertial sensor 191 may be used to identify a change of an angle between the first housing 160 and the second housing 180. For example, the inertial sensor 191 may be used to identify a movement (or a change of the movement) of each of the first housing 160 and the second housing 180. For example, the inertial sensor 191 may be used to identify a posture (or a change of the posture) of each of the first housing 160 and the second housing 180.

For example, the at least one sensor 130 may include a hall sensor 192. For example, the hall sensor 192 may be used to identify a state of the electronic device 101 to be illustrated below. For example, the hall sensor 192 may be used to identify a change of an angle between the first housing 160 and the second housing 180. For example, the hall sensor 192 may include a first hall sensor component 192-1 and a second hall sensor component 192-2. For example, the first hall sensor component 192-1 may be a magnet that provides or forms a magnetic field. For example, the first hall sensor element 192-1 may be referred to as a transmit portion in terms of providing a magnetic field. For example, the second hall sensor component 192-2 may include a circuit for identifying the magnetic field or a change of the magnetic field. For example, the second hall sensor component 192-2 may be referred to as a receive portion in terms of obtaining data on the magnetic field or the change of the magnetic field. For example, each of the first hall sensor component 192-1 and the second hall sensor component 192-2 may be positioned within an edge area of each of the first housing 160 and the second housing 180 (or the first display area 141 and the second display area 142). For example, each of the first hall sensor component 192-1 and the second hall sensor component 192-2 may be disposed along a periphery of each of the first housing 160 and the second housing 180 (or the first display area 141 and the second display area 142) that is perpendicular to the axis 155. For example, each of the first hall sensor component 192-1 and the second hall sensor component 192-2 may be disposed along a periphery of each of the first housing 160 and the second housing 180 (or the first display area 141 and the second display area 142) that is parallel to the axis 155. For example, the first hall sensor component 192-1 and the second hall sensor component 192-2 may be substantially symmetrical to the axis 155. However, it is not limited thereto.

For example, the at least one sensor 130 may include a proximity sensor 193. For example, the proximity sensor 193 may be used to identify an object adjacent to the electronic device 101. For example, the proximity sensor 193 exposed through a portion of the first display area 141 may be used to identify a state of the electronic device 101 to be illustrated below. For example, the proximity sensor 193 may be used to identify a change of an angle between the first housing 160 and the second housing 180.

For example, the at least one sensor 130 may include an angle sensor 194. For example, the angle sensor 194 may be used to identify a change of the angle between the first housing 160 and the second housing 180. For example, the angle sensor 194 may be used to identify a state of the electronic device 101 to be illustrated below. For example, the angle sensor 194 may be disposed in relation to the hinge structure. For example, the angle sensor 194 may be disposed within the hinge structure. For example, the angle sensor 194 may be disposed along the hinge structure.

For example, the at least one sensor 130 may include a stretch sensor 195. For example, the stretch sensor 195 may be used to identify a change of the angle between the first housing 160 and the second housing 180. For example, the stretch sensor 195 may be used to identify a state of the electronic device 101 to be illustrated below. For example, the stretch sensor 195 may be disposed in relation to the axis 155. For example, the stretch sensor 195 may be perpendicular to the axis 155. However, it is not limited thereto.

Referring back to FIG. 1A, the electronic device 101 may be a foldable device having an axis (e.g., the axis 155) in a horizontal direction within a portrait mode. For example, the electronic device 101 may be a foldable device having an axis in a vertical direction within the portrait mode.

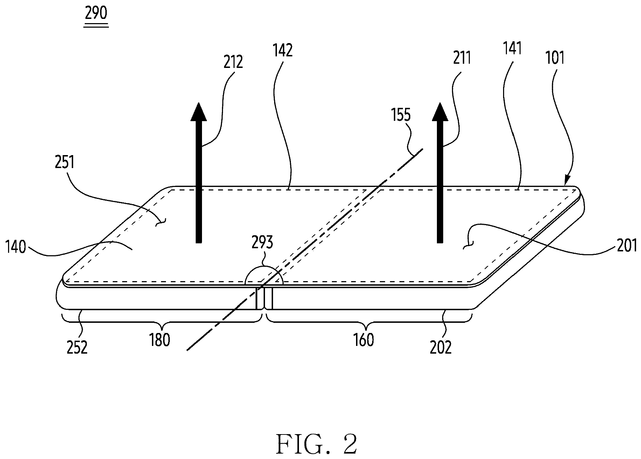

For example, the electronic device 101, which is the foldable device having the axis in the horizontal direction within the portrait mode, may have a plurality of states identified through the at least one sensor 130. For example, the electronic device 101, which is the foldable device having the axis in the vertical direction within the portrait mode, may have a plurality of states identified through the at least one sensor 130. The plurality of states may be illustrated through FIGS. 2 to 6.

FIGS. 2, 3, 4, 5, and 6 illustrate an example of a state of an exemplary electronic device.

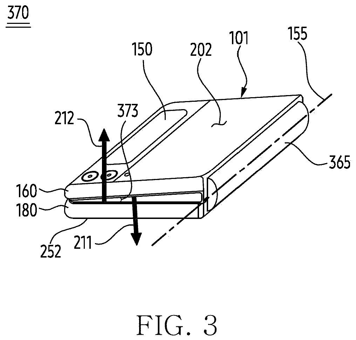

Referring to FIGS. 2 and 3, an electronic device 101 may have an axis 155 in a horizontal direction within the portrait mode. For example, the electronic device 101 may change a state of the plurality of states to another state of the plurality of states.

A first housing 160 of the electronic device 101 may include a surface 201 and a surface 202 opposite to the surface 201. For example, a first display area 141 may be positioned on the surface 201. For example, a display 150 (shown in FIG. 3) may be positioned on the surface 202.

A second housing 180 of the electronic device 101 may include a surface 251 and a surface 252 opposite to the surface 251. For example, a second display area 142 may be positioned on the surface 251.

The hinge structure of the electronic device 101 may provide an axis 155. For example, at least a portion of the hinge structure may be included in a hinge housing 365 (shown in FIG. 3).

For example, the electronic device 101 may provide a state 290 as a state of the plurality of states. For example, the state 290 may indicate a state that a first direction 211 in which the surface 201 faces is substantially the same as a second direction 212 in which the surface 251 faces. For example, the state 290 may indicate a state that an angle 293 between the surface 201 and the surface 251 is about 180 degrees.

For example, the electronic device 101 may provide a state 370 as another state of the plurality of states. For example, the state 370 may indicate a state that the first direction 211 is substantially opposite to the second direction 212. For example, the state 370 may indicate a state that an angle 373 between the surface 201 and the surface 251 is about 0 degrees.

Although not shown in FIGS. 2 and 3, the electronic device 101 may provide an intermediate state between the state 290 and the state 370. For example, the intermediate state may include a state that the first direction 211 is perpendicular to the second direction 212. However, it is not limited thereto.

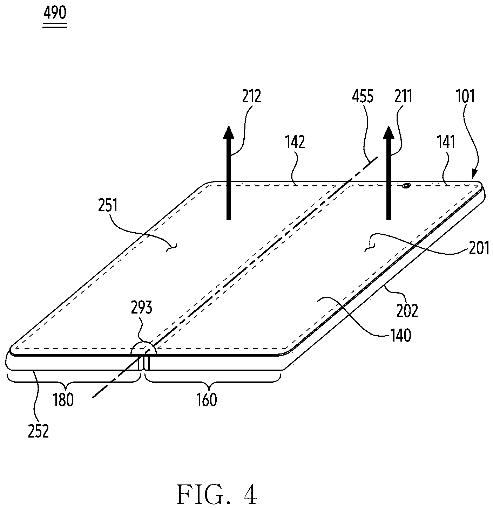

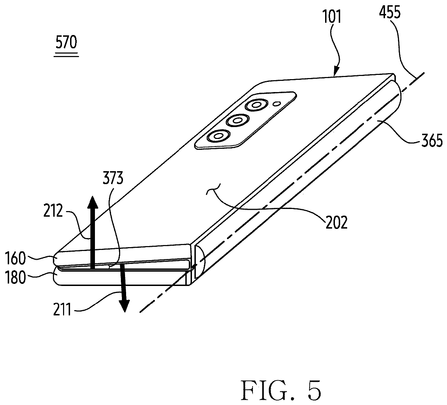

Referring to FIGS. 4 and 5, the electronic device 101 may have an axis 455 in a vertical direction within the portrait mode. For example, the electronic device 101 may change a state of the plurality of states to another state of the plurality of states.

A first housing 160 of the electronic device 101 may include a surface 201 and a surface 202 opposite to the surface 201. For example, a first display area 141 may be positioned on the surface 201.

A second housing 180 of the electronic device 101 may include a surface 251 and a surface 252 opposite to the surface 251. For example, a second display area 142 may be positioned on the surface 251. For example, although not shown in FIGS. 4 and 5, another display distinguished from a display 140 may be positioned on the surface 252.

The hinge structure of the electronic device 101 may provide an axis 455. For example, at least a portion of the hinge structure may be included in a hinge housing 365 (shown in FIG. 3).

For example, the electronic device 101 may provide a state 490 as a state of the plurality of states. For example, the state 490 may indicate a state that a first direction 211 in which the surface 201 faces is substantially the same as a second direction 212 in which the surface 251 faces. For example, the state 490 may indicate a state that an angle 293 between the surface 201 and the surface 251 is about 180 degrees.

For example, the electronic device 101 may provide a state 570 as another state of the plurality of states. For example, the state 570 may indicate a state that the first direction 211 is substantially opposite to the second direction 212. For example, the state 570 may indicate a state that an angle 373 between the surface 201 and the surface 251 is about 0 degrees.

Although not shown in FIGS. 4 and 5, the electronic device 101 may provide an intermediate state between the state 490 and the state 570. For example, the intermediate state may include a state that the first direction 211 is perpendicular to the second direction 212. However, it is not limited thereto.

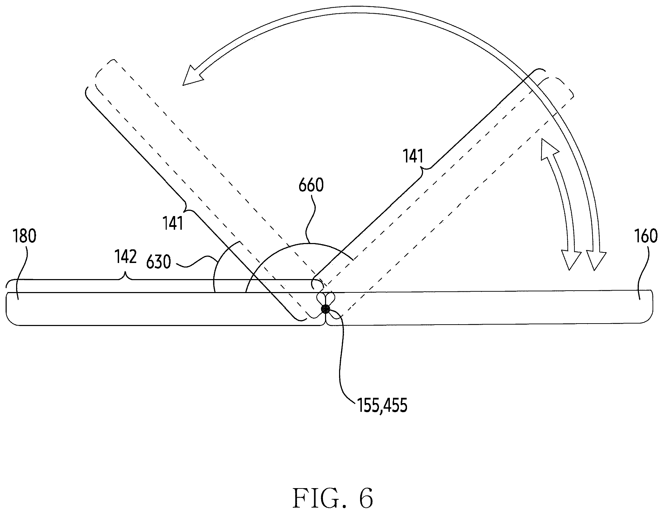

Referring to FIG. 6, a flexible display 140 of an electronic device 101 may be foldable based on an axis (e.g., axis 155 or axis 455). For example, the electronic device 101 may be in a plurality of states through the flexible display 140 foldable with respect to the axis.

For example, the flexible display 140 may include a first display area 141 and a second display area 142 extending from the first display area 141. For example, since the display 140 is foldable with respect to the axis, an angle between the first display area 141 and the second display area 142 (or an angle between a direction in which the first display area 141 faces and a direction in which the second display area 142 faces) may be changed. The electronic device 101 may have a plurality of states according to the angle. For example, a reference range may be set in the electronic device 101 to identify the plurality of states. For example, the reference range may include a first reference range for identifying the angle between 0 degrees and an angle 630 and a second reference range for identifying the angle between the angle 630 and an angle 660. For example, a first state of the plurality of states may be a state in which the angle is within the first reference range. For example, the second state of the plurality of states may be a state in which the angle is outside the first reference range and the second reference range. For example, a third state of the plurality of states may be a state in which the angle is within the second reference range. For example, a third state of the plurality of states may be a state in which the angle is within the second reference range and a portrait mode is provided. For example, a third state of the plurality of states may be a state in which the angle is within the second reference range and a landscape mode is provided. However, it is not limited thereto.

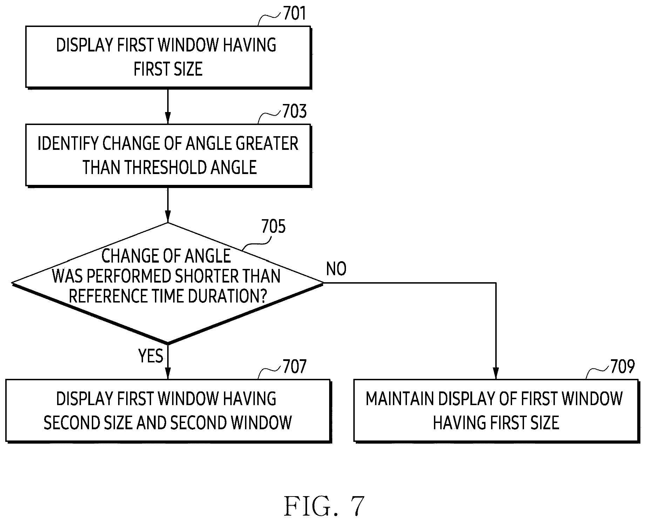

Referring back to FIG. 1A, the electronic device 101 may use a change of the angle between the first housing 160 and the second housing 180 as an input for obtaining, generating, or displaying an additional window. For example, the electronic device 101 may obtain, generate, or display the additional window based at least in part on the change of the angle. Displaying the additional window based at least in part on the change of the angle may be illustrated through FIG. 7.

FIG. 7 is a flowchart illustrating an exemplary method of displaying a first window and a second window based on a change of an angle between a first housing and a second housing.

Referring to FIG. 7, in operation 701, a processor 120 may display a first window (or view) having a first size through the display area. For example, the processor 120 may obtain a first process (or task) in response to execution of a software application. For example, the first process may indicate a unit of execution for displaying the first window. For example, the processor 120 may display the first window of the software application based on obtaining the first process. For example, the first size may correspond to the display area including the first display area and the second display area.

In operation 703, while the first window having the first size is displayed, the processor 120 may identify a change of an angle between a first housing 160 and a second housing 180, which is greater than a threshold angle, via at least one sensor 130.

For example, the threshold angle may be used to identify whether the change of the angle is caused to obtain or display an additional window (e.g., a second window illustrated below). For example, the change of the angle being greater than the threshold angle may indicate that the change of the angle may be to display the additional window. For example, the change of the angle being less than or equal to the threshold angle may indicate that the change of the angle may not be to display the additional window. For example, the change of the angle being less than or equal to the threshold angle may be a change of an angle that is different from the user's intention (e.g., a change of an angle due to external impact), the processor 120 may compare the threshold angle with the change of the angle. However, it is not limited thereto.

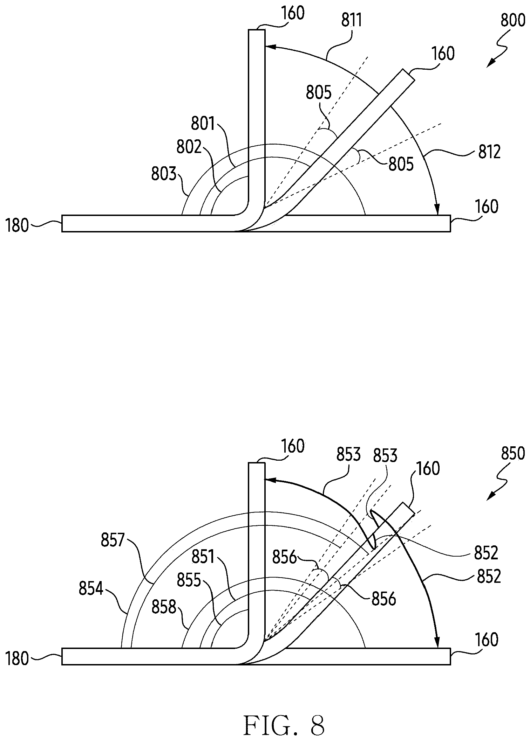

For example, the processor 120 may identify the change of the angle greater than the threshold angle, based on obtaining, from the at least one sensor 130, data indicating that the angle is changed from a first angle to a second angle different from the first angle. For example, a difference between the first angle and the second angle may be greater than the threshold angle. For example, the processor 120 may identify the change of the angle greater than the threshold angle, based on obtaining, from the at least one sensor, data indicating that the angle is changed from the first angle to the second angle and is changed from the second angle to a third angle different from the second angle. For example, the third angle may be the same as the first angle or different from the first angle. For example, the third angle may be the same as the first angle and different from the second angle, or may be different from the first angle and the second angle. The change of the angle may be illustrated through FIG. 8.

FIG. 8 illustrates an example of a change of an angle between a first housing and a second housing.

Referring to FIG. 8, the angle between the first housing 160 and the second housing 180 may be a first angle 801, like a state 800.

For example, the angle may be changed from the first angle 801 to a second angle 802 according to a first housing 160 rotating in a first direction 811 with respect to the second housing 180. For example, a difference between the first angle 801 and the second angle 802 may be greater than a threshold angle 805. For example, the processor 120 may identify the change of the angle greater than threshold angle 805, based on obtaining, from at least one sensor 130, data indicating a change from the first angle 801 to the second angle 802.

For example, the angle may be changed from the first angle 801 to the second angle 803 according to the first housing 160 rotating in a second direction 812 with respect to the second housing 180. For example, a difference between the first angle 801 and the second angle 803 may be greater than the threshold angle 805. For example, the processor 120 may identify the change of the angle greater than the threshold angle 805, based on obtaining, from the at least one sensor 130, data indicating a change from the first angle 801 to the second angle 803.

For example, the angle between the first housing 160 and the second housing 180 may be a first angle 851, like a state 850.

For example, the angle may be changed from the first angle 851 to a third angle 855 through a second angle 854, according to the first housing 160 rotating in a first direction 853 after rotating in a second direction 852 with respect to the second housing 180. For example, a difference between the first angle 851 and the second angle 854 may be less than a threshold angle 856. For example, a difference between the second angle 854 and the third angle 855 may be greater than the threshold angle 856. For example, since the difference between the second angle 854 and the third angle 855 is greater than the threshold angle 856, the processor 120 may identify, based on obtaining data indicating a change from the first angle 851 to the third angle 855 through the second angle 854 from the at least one sensor 130, the change of the angle greater than threshold angle 856.

For example, the angle may be changed from the first angle 851 to a third angle 858 through a second angle 857, according to the first housing 160 rotating in the second direction 852 after rotating in the first direction 853 with respect to the second housing 180. For example, a difference between the first angle 851 and the second angle 857 may be less than the threshold angle 856. For example, a difference between the second angle 857 and the third angle 858 may be greater than the threshold angle 856. For example, since the difference between the second angle 857 and the third angle 858 is greater than the threshold angle 856, the processor 120 may identify, based on obtaining data indicating a change from the first angle 851 to the third angle 858 through the second angle 857 from the at least one sensor 130, the change of the angle greater than threshold angle 856.

Referring back to FIG. 7, like a state 850, when the change of the angle includes a plurality of changes in the angle, the processor 120 may execute operation 703 based on identifying that an angle corresponding to a change among the plurality of changes is greater than the threshold angle. For example, when the change of the angle includes the plurality of changes in the angle, the processor 120 may execute operation 703 by identifying that an angle corresponding to a last change among the plurality of changes is greater than the threshold angle. For example, when the change of the angle includes the plurality of changes in the angle, the processor 120 may execute operation 703 by identifying that an angle corresponding to an initial change among the plurality of changes is greater than the threshold angle. However, it is not limited thereto.

In operation 705, the processor 120 may identify whether the change of the angle, greater than the threshold angle, was performed shorter than a reference time duration. For example, the reference time duration may be used to identify whether the change of the angle is caused to display an additional window (e.g., a second window illustrated below). For example, the change of the angle performed during a first time duration longer than or equal to the reference time duration may indicate that the identification in operation 703 is not for displaying the additional window. For example, the change of the angle performed during the first time duration may indicate that the identification in operation 703 is for changing a state of the electronic device 101 among displaying the additional window and changing the state of the electronic device 101. For example, the change of the angle performed during a second time duration shorter than the reference time duration may indicate that the identification in operation 703 is for displaying the additional window. For example, the reference time duration may be about 0.5 seconds. However, it is not limited thereto.

For example, identification (or measurement) of a time duration in which the change of the angle was performed may be set in various ways. For example, the processor 120 may identify a time duration interval from a start timing of the change of the angle to an end timing of the change of the angle as a time duration in which the change of the angle was performed. For example, the processor 120 may identify a time duration interval from a timing at which a determined time duration has elapsed from the start timing, to the end timing as a time duration at which the change of the angle was performed. For example, the processor 120 may identify a time duration interval from the start timing to a timing at which a determined time duration has elapsed from the end timing, as the time duration at which the change of the angle was performed. For example, the processor 120 may identify a time duration interval from a timing at which a housing (e.g., first housing 160 or second housing 180) of the electronic device 101 was gripped for the change of the angle to the end timing as the time duration at which the change of the angle was performed. However, it is not limited thereto.

For example, the processor 120 may execute operation 709 based on the change of the angle during the first time duration and execute operation 707 based on the change of the angle during the second time duration.

FIG. 8 illustrates an example of identifying the change of the angle using the reference time duration in operation 705, but this is for convenience of description.

Operation 705 may be executed through a comparison between a speed at which the angle is changed and a reference speed. For example, the processor 120 may compare a maximum speed of the change of the angle with the reference speed, and then execute operation 707 based on the maximum speed higher than the reference speed, and execute operation 709 based on the maximum speed lower than or equal to the reference speed. For example, the processor 120 may compare a minimum speed of the change of the angle with the reference speed, and then execute operation 707 based on the minimum speed higher than the reference speed, and execute operation 709 based on the minimum speed lower than or equal to the reference speed. For example, the processor 120 may compare an average speed of the change of the angle with the reference speed, and then execute operation 707 based on the average speed higher than the reference speed and execute operation 709 based on the average speed lower than or equal to the reference speed. For example, the processor 120 may compare a start speed of the change of the angle with the reference speed, and then execute operation 707 based on the start speed higher than the reference speed, and execute operation 709 based on the start speed lower than or equal to the reference speed. For example, the processor 120 may compare a speed immediately before the change of the angle is completed with the reference speed, and then execute operation 707 based on the speed higher than the reference speed, and execute operation 709 based on the speed lower than or equal to the reference speed.

In operation 707, the processor 120 may display the first window having a second size smaller than the first size and a second window through the display area, on a condition that the change of the angle, which is greater than the threshold angle, is performed shorter than the reference time duration. For example, the second window may be displayed based on a second process that is an additional process executed in response to the change of the angle performed during the second time duration. For example, the second process may indicate a unit of execution for displaying the second window. For example, the second window may have substantially the same size as the second size. For example, the second window may have a size different from the second size.

For example, the second size may be smaller than the first size. For example, a size of the first window displayed in operation 707 may be a reduced size of the first window displayed in operation 701.

For example, arrangement of contents (or visual objects) within the first window having the second size may be different from arrangement of contents within the first window having the first size. For example, the first window having the second size may provide at least a portion of information provided through the first window having the first size. For example, a portion of the contents within the first window having the first size may be excluded from the first window having the second size. For example, a size of each of the contents within the first window having the second size may be smaller than a size of each of the contents within the first window having the first size. For example, at least a portion of the contents within the first window having the second size may have a reduced size. However, it is not limited thereto.

For example, a software application providing the second window may be the same as or different from a software application providing the first window. For example, the first window and the second window may be provided through a single software application or may be respectively provided through different software applications.

For example, the second window may be associated with the first window. For example, the second window may provide a service corresponding to a service provided through the first window. For example, the second window may provide a portion of the information provided through the first window in detail. For example, the second window may provide a function for controlling the first window. For example, the second window may provide an additional function for the first window. However, it is not limited thereto.

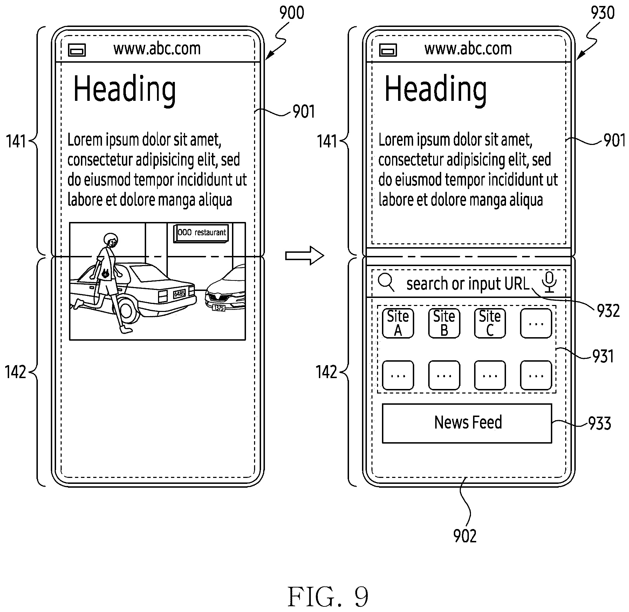

A display of the first window having the second size and the second window may be illustrated through FIG. 9.

FIG. 9 illustrates an example of a first window and a second window.

Referring to FIG. 9, in a state 900, the processor 120 may display a first window 901 having the first size through the display area. For example, the first window 901 may include a webpage. For example, the first window 901 may be a window provided from a software application for an Internet browser service. For example, the first window 901 may be a window provided from a software application displaying a webpage for other services. However, it is not limited thereto.

In an embodiment, the processor 120 may change the state 900 to a state 930, based on identifying that the change of the angle greater than the threshold angle is performed during the second time duration shorter than the reference time duration.

In the state 930, the processor 120 may display the first window 901 having the second size and the second window 902 through the display area. For example, the first window 901 having the second size may be displayed through a first display area 141, and the second window 902 may be displayed through a second display area 142.

FIG. 9 illustrates the first window 901, having the second size, displayed through the first display area 141 and the second window 902 displayed through the second display area 142, but this is for convenience of description. For example, the first window 901 having the second size may be displayed through the second display area 142, and the second window 902 may also be displayed through the first display area 141. However, it is not limited thereto.

FIG. 9 illustrates an example in which a size (e.g., the second size) of the first window 901 is the same as a size of the second window 902 in the state 930, but this is for convenience of description. For example, the size of the first window 901 displayed in the state 903 may also be different from the size of the second window 902. However, it is not limited thereto.

For example, the second window 902, which is a window associated with the first window 901, may be implemented in various ways. For example, unlike the first window 901 including a webpage, the second window 902 may include executable objects 931 for respectively displaying webpages different from the webpage. For example, at least a portion of the executable objects 931 may be included in the second window 902 according to a user input. For example, unlike the first window 901 including the webpage, the second window 902 may include a text input portion 932 for a search function. For example, the second window 902 may include a content 933 on a determined website. For example, the second window 902 may be referred to as a quick access panel, in that it is a window associated with a service provided through the first window 901 and for providing other information distinguished from the information provided through the first window 901.

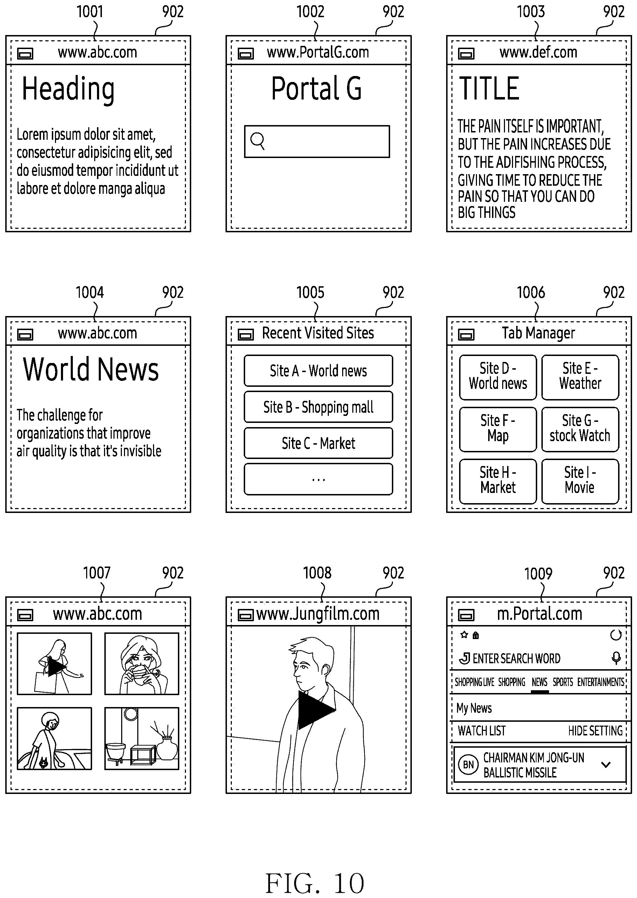

For example, the second window 902 may have various types. The various types may be illustrated through FIG. 10.

FIG. 10 illustrates examples of a second window of various types.

Referring to FIG. 10, the second window 902 may include a webpage 1001 provided through the first window 901. For example, in order to provide multiple services with respect to the webpage 1001, the second window 902 may include the webpage 1001 provided through the first window 901.

For example, the second window 902 may include a webpage 1002 distinguished from a webpage provided through the first window 901. For example, the webpage 1002 may be a webpage for providing a search function. For example, the webpage 1002 may be a webpage of a portal site. For example, the webpage 1002 may be included in the second window 902 based on a user setting.

For example, unlike the first window 901 including text written in a first language, the second window 902 may include text 1003 translated from the first language to the second language. For example, the second window 902 may include a content (e.g., the text 1003) obtained by executing a translation function to the first window 901.

For example, the second window 902 may include a webpage 1004 of a determined website. For example, the second window 902 may include the webpage 1004 to provide access to a website frequently accessed by users.

For example, the second window 902 may include executable objects 1005 for respectively displaying webpages that were displayed before a webpage displayed within the first window 901. For example, the second window 902 may include executable objects 1005 for enhancing user convenience.

For example, the second window 902 may include executable objects 1006 for respectively displaying webpages provided through tabs set within the first window 901. For example, an executable object with respect to the webpage displayed within the first window 901 may be excluded from the executable objects 1006. However, it is not limited thereto.

For example, the second window 902 may include executable objects 1007 for respectively providing images in the webpage within the first window 901. For example, at least a portion of the images may be a static image or a dynamic image. For example, when a state of the electronic device 101 is the third state defined through the description of FIG. 6 after the change of the angle is completed, the second window 902 including the executable objects 1007 may be displayed through the first display area 141. However, it is not limited thereto. For example, each of the executable objects 1007 may include a thumbnail image of each of the images. However, it is not limited thereto.

For example, the second window 902 may include an image 1008 among images in the webpage within the first window 901. For example, when a state of the electronic device 101 is the third state defined through the description of FIG. 6 after the change of the angle is completed, the second window 902 including the image 1008 may be displayed through the first display area 141. However, it is not limited thereto. For example, the image 1008 may be an image positioned in the upper left in the webpage within the first window 901 among the images. For example, the image 1008 may be a focused image among the images. However, it is not limited thereto.

For example, the second window 902 may include a webpage 1009 provided through a second tab that is distinguished from a first tab providing a webpage displayed within the first window 901. For example, the second window 902 may include the webpage 1009 to simplify user input for switching from the first tab to the second tab. However, it is not limited thereto.

Referring back to FIG. 7, in operation 709, the processor 120 may maintain the display of the first window having the first size, on a conditions that the change of the angle, which is greater than the threshold angle, is performed longer than the reference time duration or performed equal to the reference time duration. For example, since the change of the angle performed during the first time duration longer than or equal to the reference time duration indicates that the change of the angle is not for displaying an additional window, the processor 120 may maintain the display of the first window having the first size. Maintaining the display of the first window may be illustrated through FIG. 9.

Referring to FIG. 9, the processor 120 may maintain the state 900 based on identifying that the change of the angle greater than the threshold angle is performed during the first time duration longer than the reference time duration. For example, the processor 120 may ignore data indicating that the change of the angle greater than the threshold angle is performed during the first time duration longer than the reference time duration. However, it is not limited thereto.

Although not shown in FIG. 7, the processor 120 may maintain displaying the first window 901 having the first size, based on a change of the angle less than or equal to the threshold angle. For example, the processor 120 may maintain the state 900 based on the change of the angle less than or equal to the threshold angle.

As described above, the electronic device 101 may identify an input for an additional window (e.g., the second window) through a change of the angle between the first housing 160 and the second housing 180. Since the change of the angle may be a simplified input, the electronic device 101 providing an environment more suitably configured for a single window may reduce the amount of computation for processing inputs received to obtain or display multiple windows through identification of the change of the angle.

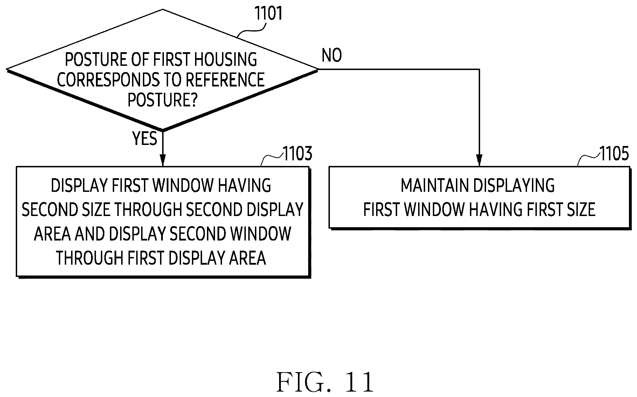

Referring back to FIG. 1, the processor 120 may identify whether to display or obtain the second window that is an additional window, based on the change of the angle during the second time duration and a posture of the first housing 160 after the change of the angle is performed. Identifying whether to display or obtain the second window based on the change of the angle during the second time duration and the posture of the first housing 160 may be exemplified through FIG. 11.

FIG. 11 is a flowchart illustrating an exemplary method of displaying a first window and a second window based on a posture of a first housing.

Referring to FIG. 11, in operation 1101, the processor 120 may identify through at least one sensor 130 whether a posture of the first housing 160 after the change of the angle is performed corresponds to a reference posture. For example, the reference posture may be used to identify whether the first display area 141 among the first display area 141 and the second display area 142 faces a user's gaze. For example, the reference posture may indicate a posture of the first housing 160 in which a direction (e.g., the first direction 211) in which the first housing 160 faces is perpendicular to the ground. However, it is not limited thereto.

For example, the processor 120 may execute operation 1101 as a condition that a state of the electronic device 101 after the change of the angle is performed is the third state defined through the description of FIG. 6. However, it is not limited thereto.

For example, the processor 120 may execute operation 1103 based on data indicating the posture of the first housing 160 corresponding to the reference posture. For example, the processor 120 may execute operation 1105 based on data indicating the posture of the first housing 160 different from the reference posture.

In operation 1103, the processor 120 may display the first window having the second size through the second display area 142 and display the second window through the first display area 141, on a condition that the posture is the reference posture. For example, the processor 120 may display the first window through the second display area 142 and the second window through the first display area 141, based on that the state of the electronic device 101 after the change of the angle is performed is the third state, that the posture is the reference posture, and that the change of the angle is performed during the second time duration.

For example, in response to the data indicating the reference posture and the change of the angle during the second time duration, the processor 120 may display an animation for moving the first window having the first size displayed through the display area to the second display area 142 and an animation causing the second window to appear from a periphery of the first display area 141 according to the movement of the first window. However, it is not limited thereto.

For example, the second window may include the executable objects 1007 or the image 1008 of FIG. 10. However, it is not limited thereto.

In operation 1105, the processor 120 may maintain displaying the first window having the first size through the display area, on a condition that the posture is different from the reference posture. For example, based on data indicating the difference from the reference posture and the change of the angle during the second time duration, the processor 120 may display the first window having the second size through the second display area, and refrain from displaying the second window through the first display area. For example, since the posture being different from the reference posture may correspond to the user's intention that indicates maintaining the display of the first window having the first size, the processor 120 may maintain the display of the first window having the first size.

As described above, the electronic device 101 may obtain or display an additional window by identifying the posture of the first housing 160 as well as the change of the angle. For example, since the identification may reduce the display of the additional window from being executed differently from the user's intention, the electronic device 101 may reduce a load of the electronic device 101 according to unintended execution.

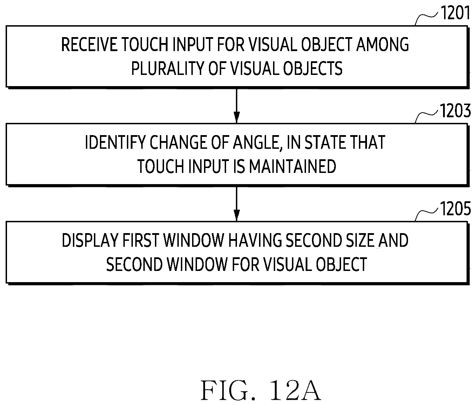

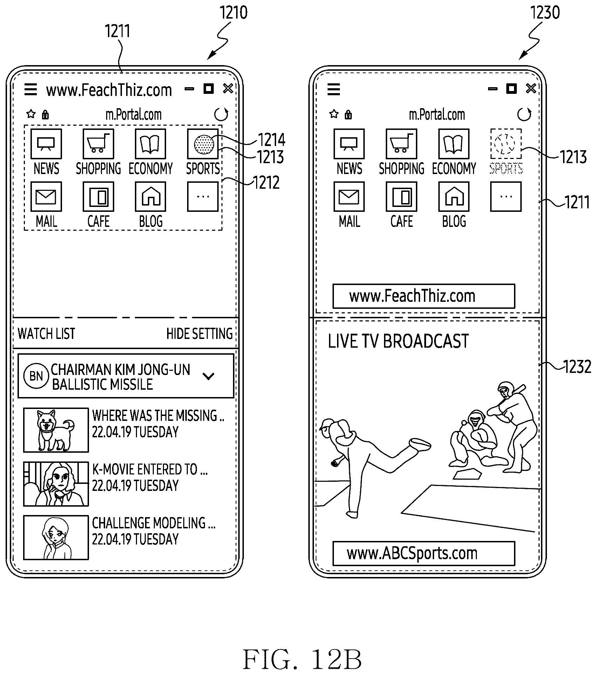

Referring back to FIG. 1, the processor 120 may identify one of a plurality of windows capable of displaying in the electronic device 101 as an additional window. Identifying the window may be exemplified through FIGS. 12A and 12B.

FIG. 12A is a flowchart illustrating an exemplary method of displaying a first window and a second window based on a touch input.

FIG. 12B illustrates an example of a second window displayed based on a touch input.

Referring to FIG. 12A, in operation 1201, the processor 120 may receive a touch input for a visual object among a plurality of visual objects included in the first window having the first size. For example, referring to FIG. 126B, in a state 1210, the processor 120 may display a first window 1211 having the first size through the display area. For example, the processor 120 may receive a touch input 1214 indicating to select a visual object of a plurality of visual objects 1212 within the first window 1211. For example, the touch input 1214 may be an input having a contact point on a visual object 1213.

Referring back to FIG. 12A, in operation 1203, the processor 120 may identify the change of the angle performed during the second time duration, in a state that the touch input for the visual object is maintained. For example, the processor 120 may identify the change of the angle performed during the second time duration through at least one sensor 130 while the contact point on the visual object is maintained. For example, referring to FIG. 12B, in the state 1210, the processor 120 may identify the change of the angle performed during the second time duration, in a state that the touch input 1214 is maintained.

Referring back to FIG. 12A, in operation 1205, the processor 120 may display the first window having the second size and the second window for the visual object through the display area, based on the change of the angle performed during the second time duration, in the state that the touch input is maintained. For example, the second window may include the visual object and at least another visual object associated with the visual object. For example, the second window may be a window for providing a function corresponding to the visual object. For example, when the visual object receiving the touch input is a link connected with another webpage, the second window may include the other webpage.

For example, the processor 120 may display remaining visual objects excluding the visual object among the plurality of visual objects within the first window having the second size. However, it is not limited thereto.

For example, referring to FIG. 12B, the processor 120 may change the state 1210 to a state 1230, in response to the change of the angle performed during the second time duration while the touch input 1214 is maintained. For example, in the state 1230, the processor 120 may display the first window 1211 having the second size and a second window 1232 corresponding to the visual object 1213 through the display area. For example, the visual object 1213 may be removed from the first window 1211.

Although not shown in FIGS. 12A and 12B, the processor 120 may display the first window having the second size and the second window, based on the change of the angle performed during the second time duration after a touch input for the visual object is released or the change of the angle performed during the second time duration before a touch input for the visual object is received. For example, the second window may be a window for providing a determined function distinguished from a function of the visual object.

As described above, the electronic device 101 may identify a type of the additional window by linking a touch input and the change of the angle for displaying the additional window. For example, an enhanced user experience may be provided through the identification of the type of the additional window.

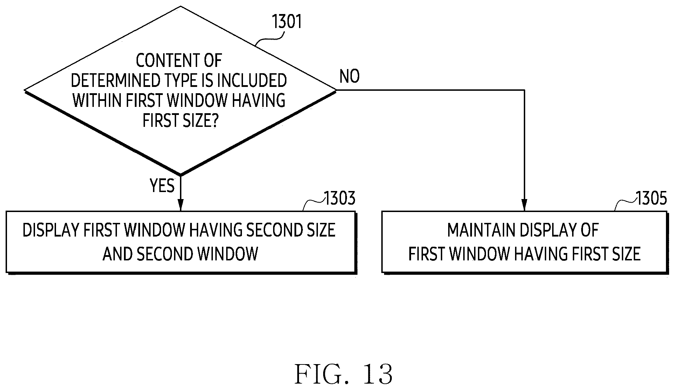

Referring back to FIG. 1, the processor 120 may identify whether a content of a determined type is included within the first window. Identifying whether the content of the predetermined type is included within the first window may be exemplified through FIG. 13.

FIG. 13 is a flowchart illustrating an exemplary method of displaying a first window and a second window based on whether a content of determined type is included in the first window.

Referring to FIG. 13, in operation 1301, the processor 120 may identify whether a content of a determined type is included within the first window having the first size. For example, when displayed in a separate window (e.g., a second window) distinguished from the first window, the content of the determined type may be a content providing higher quality than when displayed in the first window. For example, the content of the determined type may be a content in which quality is enhanced when displayed in an enlarged size. For example, the content of the determined type may be a content in which quality is enhanced when displayed independently of other content. For example, the content of the determined type may be a static image or a dynamic image. However, it is not limited thereto.

For example, the processor 120 may execute operation 1303 based on the first window having the first size including the content of the determined type and the change of the angle performed during the second time duration, and execute operation 1305 based on the first window having the first size and including at least one content of another type distinguished from the content of the determined type and the change of the angle performed during the second time duration.

In operation 1303, on a conditions that the content of the determined type is included in the first window having the first size and the change of the angle is performed during the second time duration, the processor 120 may display the first window having the second size and the second window including the content of the determined type or an executable object for displaying the content of the determined type. For example, the display of the content of the determined type of within the first window may be ceased. However, it is not limited thereto.

In operation 1305, on a condition that another content distinguished from the determined type is included in the first window having the first size and the change of the angle is performed during the second time duration, the processor 120 may maintain the display of the first window having the first size. For example, the processor 120 may maintain the display of the first window having the first size by refraining from executing an additional process (e.g., the second process) for displaying the second window.

As described above, the electronic device 101 may provide an enhanced user experience in relation to the execution of the additional process, by identifying, together with the change of the angle, whether the content of the determined type, which provides a higher immersion when displayed in an independent space, is included within the first window.

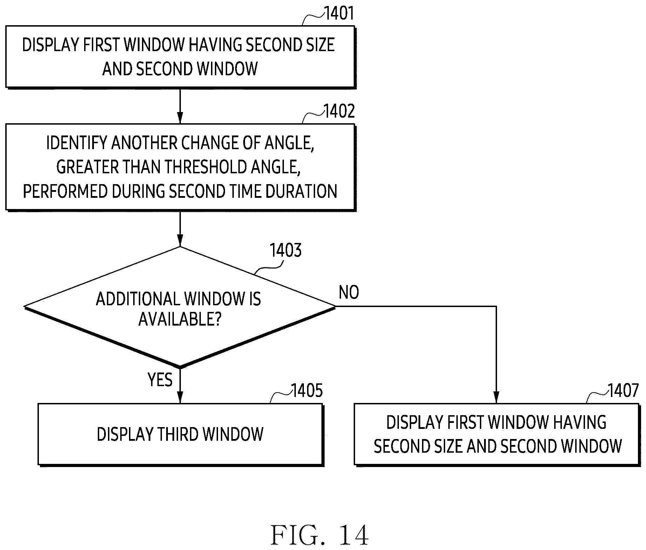

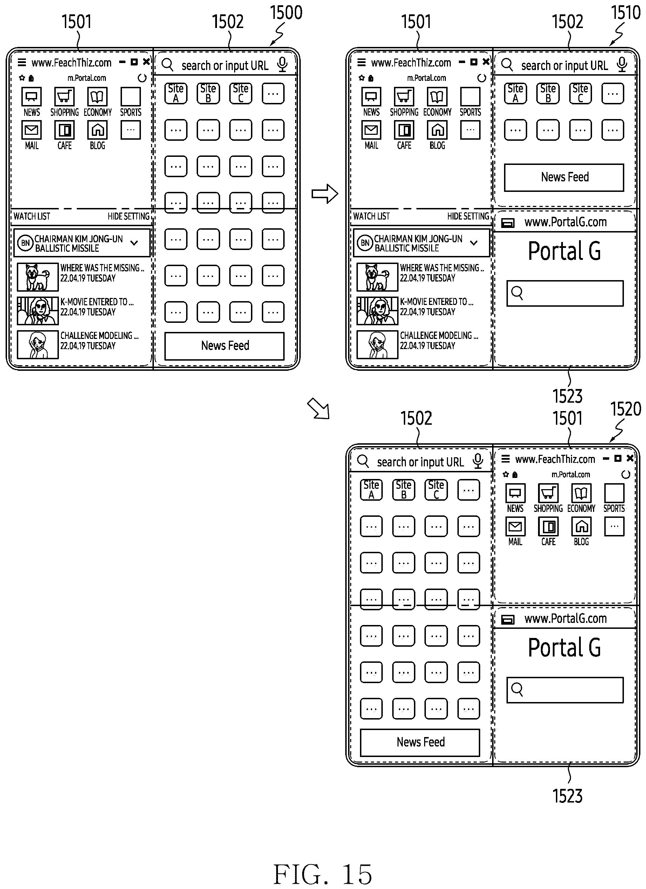

Referring back to FIG. 1, the processor 120 may identify whether an additional window different from multiple windows may be displayed while displaying the multiple windows. For example, the processor 120 may perform the identification, in order to reduce malfunction due to a load of the electronic device 101 or a limitation of a size of the flexible display 140. The identification may be exemplified through FIGS. 14 and 15.

FIG. 14 is a flowchart illustrating an exemplary method of displaying a third window according to whether an additional window is displayable.

FIG. 15 illustrates an example of a third window that is an additional window.

Referring to FIG. 14, in operation 1401, the processor 120 may display the first window having the second size and the second window. For example, operation 1401 may correspond to operation 707 of FIG. 7.

In operation 1402, the processor 120 may identify another change of the angle greater than the threshold angle, performed during the second time duration while the first window and having the second size the second window are displayed. For example, the other change of the angle may be identified through at least one sensor 130.

In operation 1403, the processor 120 may identify whether an additional window is available (or displayable) based on the other change of the angle.

For example, the processor 120 may identify whether the additional window is available, by identifying a load of the processor 120 in response to the other change of the angle. For example, the processor 120 may identify that the additional window is available based on identifying that the load is less than a reference load, and otherwise identify that the additional window is not available. However, it is not limited thereto.

For example, the processor 120 may identify whether the additional window is available, by identifying a size of each of objects (or windows) in frame data provided to the flexible display 140 for display through the display area in response to the other change of the angle. For example, the processor 120 may identify that the additional window is available based on identifying that a size of each of the objects is greater than a reference size, and otherwise identify that the additional window is not available.

For example, the processor 120 may execute operation 1405 based on identifying that the additional window is available, and execute operation 1407 based on identifying that the additional window is not available.

In operation 1405, on a condition that the additional window is available, the processor 120 may display a third window corresponding to a third process executed (or obtained) in response to identifying that the additional window is available together with the first window having the second size and the second window having a reduced size through the display area, or display the third window together with the first window having a third size smaller than the second size and the second window.

For example, referring to FIG. 15, in a state 1500, the processor 120 may display a first window 1501 having the second size and a second window 1502. The processor 120 may change the state 1500 to a state 1510 or a state 1520, based on identifying that the additional window is available through operation 1403.

In the state 1510, the processor 120 may display a third window 1523 together with the first window 1501 having the second size and the second window 1502 having a reduced size. For example, the processor 120 may maintain a size of the first window 1501, which is a window most recently receiving a user input among the first window 1501 and the second window 1502, as the second size. For example, the processor 120 may display the third window 1523 within a space within the display area formed by reducing the size of the second window 1502.

In the state 1520, the processor 120 may display the third window 1523 together with the second window 1502 and the first window 1501 having the third size. For example, the processor 120 may maintain the size of the second window 1502, which is a window most recently receiving a user input among the first window 1501 and the second window 1502. For example, the second window 1502 may be moved to maintain the size when changing from the state 1500 to the state 1520. However, it is not limited thereto. For example, the processor 120 may display the third window 1523 within a space within the display area formed by reducing the size of the first window 1501.

Although not shown in FIG. 15, the processor 120 may provide another state distinguished from the state 1510 and the state 1520, based on identifying that the additional window is available through operation 1403. For example, the processor 120 may display the third window 1523 together with the first window 1501 having the third size and the second window 1502 having the reduced size.

Referring back to FIG. 14, in operation 1407, the processor 120 may maintain the display of the first window having the second size and the second window, based on identifying that the additional window is not available. For example, the processor 120 may refrain from obtaining, executing, or generating the third process.

As described above, the electronic device 101 may identify whether an additional window is available based on the other change of the angle. For example, the electronic device 101 may reduce malfunctions of the electronic device 101 caused by generating or executing the additional window through such identification.

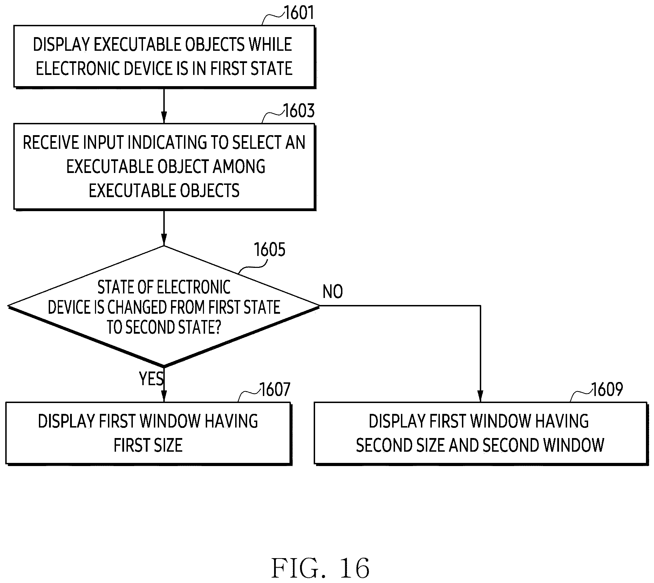

Referring back to FIG. 1, the processor 120 may adaptively change a display of a window according to a change in a state of the electronic device 101. For example, when the electronic device 101 includes a display 150, the processor 120 may adaptively change the display of the window based on the change of the state of the electronic device 101 and an input received through the display 150. The change may be exemplified through FIGS. 16 to 17.

FIG. 16 is a flowchart illustrating an exemplary method of displaying a first window and a second window according to a change in a state of an exemplary electronic device.

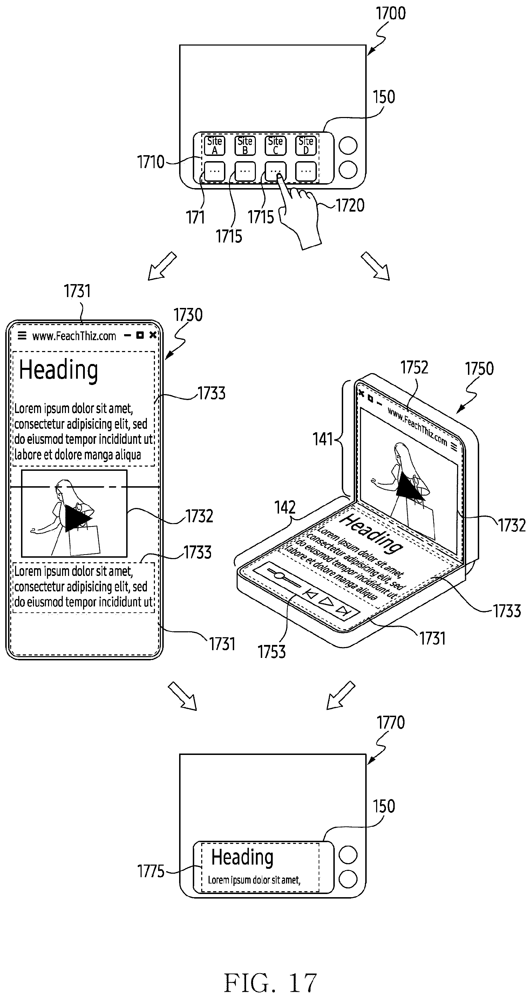

FIG. 17 illustrates an example of a first window displayed according to a change in a state of an exemplary electronic device.

Referring to FIG. 16, in operation 1601, the processor 120 may display executable objects through the display 150 while the electronic device 101 is in a first state. For example, the first state may indicate the first state exemplified through the description of FIG. 6. For example, the first state may indicate a state in which the first display area 141 and the second display area 142 overlap. However, it is not limited thereto. For example, the executable objects may be used to indicate webpages, respectively. For example, referring to FIG. 17, in a state 1700, the processor 120 may display executable objects 1710 through the display 150. For example, the executable objects 1710 may be used to respectively display webpages through the flexible display 140 in response to a touch input.

Referring back to FIG. 16, in operation 1603, the processor 120 may receive an input indicating to select an executable object among the executable objects. For example, referring to FIG. 17, in the state 1700, the processor 120 may receive an input 1720 for an executable object 1715 among the executable objects 1710. For example, the processor 120 may identify a function corresponding to the executable object 1715 identified by the input 1720. For example, in response to the identification, the processor 120 may prefetch a process corresponding to the function into a nonvolatile memory (e.g., a non-volatile memory 2034 of FIG. 20) of the electronic device 101. For example, the prefetch may be executed to provide a faster response speed. However, it is not limited thereto.

Referring back to FIG. 16, in operation 1605, after the input is received, the processor 120 may identify through at least one sensor 130 whether a state of the electronic device 101 is changed from the first state to a second state or from the first state to a third state. For example, the second state may be the second state defined through the description of FIG. 6. For example, the second state may indicate a state in which the first display area 141 and the second display area 142 form a plane. For example, the third state may be the third state defined through the description of FIG. 6.

For example, the processor 120 may execute operation 1607 based on a change from the first state to the second state, and may execute operation 1609 based on a change from the first state to the third state. Although not shown in FIG. 16, after the input is received in operation 1603, the processor 120 may maintain displaying the executable objects, like operation 1601, while the state of the electronic device 101 is maintained in the first state. However, it is not limited thereto.

In operation 1607, on a condition that the first state is changed to the second state after the input is received, the processor 120 may display the first window having the first size including a webpage indicated by the executable object in which the input is received through the display area. For example, referring to FIG. 17, the processor 120 may change the state 1700 to a state 1730 based on the change from the first state to the second state and the input. Within the state 1730, the processor 120 may display a first window 1731 including a webpage corresponding to an executable object 1715 in which an input 1720 is received. For example, the first window 1731 may include text 1733 and a video 1732. However, it is not limited thereto.

Although not shown in FIG. 16, the processor 120 may change the state 1730 to a state 1770 in response to identifying the second state changed to the first state. For example, in the state 1770, the processor 120 may display a screen 1775 corresponding to a portion of the first window 1731 through the display 150. For example, the screen 1775 may include title information in text 1733 of the first window 1731. For example, the screen 1775 may be displayed to indicate what information was displayed in the first window 1731 within the second state. However, it is not limited thereto.

Referring back to FIG. 16, in operation 1609, on a condition that the first state is changed to the third state after the input is received, the processor 120 may display the first window having the second size and the second window. For example, operation 1609 may be executed on a condition that the first window includes a content of a determined type (e.g., video). For example, when the first window does not include a content of the determined type, the processor 120 may execute operation 1607 on a condition that the first state is changes to the third state after the input is received, unlike the illustration of FIG. 16. For example, the second window displayed in operation 1609 may be a window for displaying a content of the determined type within the first window. However, it is not limited thereto. For example, the second window displayed in operation 1609 may be a window including an executable object (e.g., information on a uniform resource locator (URL)) for accessing the content of the determined type within the first window.

For example, referring to FIG. 17, the processor 120 may change the state 1700 to a state 1750 based on the change from the first state to the third state and the input. For example, in the state 1750, the processor 120 may display the first window 1731 having the second size and a second window 1752. For example, the second window 1752 may be displayed through the first display area 141. For example, the second window 1752 may include the video 1732 included in the first window 1731 having the first size. For example, the video 1732 in the second window 1752 may have an enlarged size. For example, the first window 1731 having the second size displayed through the second display area 142 may include a portion of the text 1733. For example, the first window 1731 having the second size may further include an area 1753 for controlling the video 1732 in the second window 1752. For example, since the second display area 142 has a more suitable posture for receiving a user input than the first display area 141 within the third state, the processor 120 may display the area 1753 within the first window 1731 having the second size.

FIG. 17 illustrates an example in which the second window 1752 includes the video 1732 in the state 1750, but this is for convenience of explanation. The second window 1752 displayed in the state 1750 may include an executable object for accessing the video 1732, instead of the video 1732. However, it is not limited thereto.

FIG. 17 describes an example in which the state 1700 is changed to the state 1770 through the state 1730, but this is for convenience of explanation. For example, the change from the state 1730 to the state 1770 may be executed according to a change of a state of the electronic device 101, independently of whether the state 1700 is provided. However, it is not limited thereto.

As described above, the electronic device 101 may provide an enhanced user experience by adaptively obtaining a process (or window) according to the state of the electronic device 101.

FIG. 18 is a block diagram illustrating an electronic device 1801 in a network environment 1800 according to various embodiments.

Referring to FIG. 18, the electronic device 1801 in the network environment 1800 may communicate with an electronic device 1802 via a first network 1898 (e.g., a short-range wireless communication network), or at least one of an electronic device 1804 or a server 1808 via a second network 1899 (e.g., a long-range wireless communication network). According to an embodiment, the electronic device 1801 may communicate with the electronic device 1804 via the server 1808. According to an embodiment, the electronic device 1801 may include a processor 1820, memory 1830, an input module 1850, a sound output module 1855, a display module 1860, an audio module 1870, a sensor module 1876, an interface 1877, a connecting terminal 1878, a haptic module 1879, a camera module 1880, a power management module 1888, a battery 1889, a communication module 1890, a subscriber identification module(SIM) 1896, or an antenna module 1897. In some embodiments, at least one of the components (e.g., the connecting terminal 1878) may be omitted from the electronic device 1801, or one or more other components may be added in the electronic device 1801. In some embodiments, some of the components (e.g., the sensor module 1876, the camera module 1880, or the antenna module 1897) may be implemented as a single component (e.g., the display module 1860).

The processor 1820 may execute, for example, software (e.g., a program 1840) to control at least one other component (e.g., a hardware or software component) of the electronic device 1801 coupled with the processor 1820, and may perform various data processing or computation. According to an embodiment, as at least part of the data processing or computation, the processor 1820 may store a command or data received from another component (e.g., the sensor module 1876 or the communication module 1890) in volatile memory 1832, process the command or the data stored in the volatile memory 1832, and store resulting data in non-volatile memory 1834. According to an embodiment, the processor 1820 may include a main processor 1821 (e.g., a central processing unit (CPU) or an application processor (AP)), or an auxiliary processor 1823 (e.g., a graphics processing unit (GPU), a neural processing unit (NPU), an image signal processor (ISP), a sensor hub processor, or a communication processor (CP)) that is operable independently from, or in conjunction with, the main processor 1821. For example, when the electronic device 1801 includes the main processor 1821 and the auxiliary processor 1823, the auxiliary processor 1823 may be adapted to consume less power than the main processor 1821, or to be specific to a specified function. The auxiliary processor 1823 may be implemented as separate from, or as part of the main processor 1821.

The auxiliary processor 1823 may control at least some of functions or states related to at least one component (e.g., the display module 1860, the sensor module 1876, or the communication module 1890) among the components of the electronic device 1801, instead of the main processor 1821 while the main processor 1821 is in an inactive (e.g., sleep) state, or together with the main processor 1821 while the main processor 1821 is in an active state (e.g., executing an application). According to an embodiment, the auxiliary processor 1823 (e.g., an image signal processor or a communication processor) may be implemented as part of another component (e.g., the camera module 1880 or the communication module 1890) functionally related to the auxiliary processor 1823. According to an embodiment, the auxiliary processor 1823 (e.g., the neural processing unit) may include a hardware structure specified for artificial intelligence model processing. An artificial intelligence model may be generated by machine learning. Such learning may be performed, e.g., by the electronic device 1801 where the artificial intelligence is performed or via a separate server (e.g., the server 1808). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1830 may store various data used by at least one component (e.g., the processor 1820 or the sensor module 1876) of the electronic device 1801. The various data may include, for example, software (e.g., the program 1840) and input data or output data for a command related thereto. The memory 1830 may include the volatile memory 1832 or the non-volatile memory 1834.

The program 1840 may be stored in the memory 1830 as software, and may include, for example, an operating system (OS) 1842, middleware 1844, or an application 1846.

The input module 1850 may receive a command or data to be used by another component (e.g., the processor 1820) of the electronic device 1801, from the outside (e.g., a user) of the electronic device 1801. The input module 1850 may include, for example, a microphone, a mouse, a keyboard, a key (e.g., a button), or a digital pen (e.g., a stylus pen).

The sound output module 1855 may output sound signals to the outside of the electronic device 1801. The sound output module 1855 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1860 may visually provide information to the outside (e.g., a user) of the electronic device 1801. The display module 1860 may include, for example, a display, a hologram device, or a projector and control circuitry to control a corresponding one of the display, hologram device, and projector. According to an embodiment, the display module 1860 may include a touch sensor adapted to detect a touch, or a pressure sensor adapted to measure the intensity of force incurred by the touch.

The audio module 1870 may convert a sound into an electrical signal and vice versa. According to an embodiment, the audio module 1870 may obtain the sound via the input module 1850, or output the sound via the sound output module 1855 or a headphone of an external electronic device (e.g., an electronic device 1802) directly (e.g., wiredly) or wirelessly coupled with the electronic device 1801.

The sensor module 1876 may detect an operational state (e.g., power or temperature) of the electronic device 1801 or an environmental state (e.g., a state of a user) external to the electronic device 1801, and then generate an electrical signal or data value corresponding to the detected state. According to an embodiment, the sensor module 1876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1877 may support one or more specified protocols to be used for the electronic device 1801 to be coupled with the external electronic device (e.g., the electronic device 1802) directly (e.g., wiredly) or wirelessly. According to an embodiment, the interface 1877 may include, for example, a high definition multimedia interface (HDMI), a universal serial bus (USB) interface, a secure digital (SD) card interface, or an audio interface.

A connecting terminal 1878 may include a connector via which the electronic device 1801 may be physically connected with the external electronic device (e.g., the electronic device 1802). According to an embodiment, the connecting terminal 1878 may include, for example, an HDMI connector, a USB connector, a SD card connector, or an audio connector (e.g., a headphone connector).

The haptic module 1879 may convert an electrical signal into a mechanical stimulus (e.g., a vibration or a movement) or electrical stimulus which may be recognized by a user via his tactile sensation or kinesthetic sensation. According to an embodiment, the haptic module 1879 may include, for example, a motor, a piezoelectric element, or an electric stimulator.

The camera module 1880 may capture a still image or moving images. According to an embodiment, the camera module 1880 may include one or more lenses, image sensors, image signal processors, or flashes.

The power management module 1888 may manage power supplied to the electronic device 1801. According to an embodiment, the power management module 1888 may be implemented as at least part of, for example, a power management integrated circuit (PMIC).

The battery 1889 may supply power to at least one component of the electronic device 1801. According to an embodiment, the battery 1889 may include, for example, a primary cell which is not rechargeable, a secondary cell which is rechargeable, or a fuel cell.

The communication module 1890 may support establishing a direct (e.g., wired) communication channel or a wireless communication channel between the electronic device 1801 and the external electronic device (e.g., the electronic device 1802, the electronic device 1804, or the server 1808) and performing communication via the established communication channel. The communication module 1890 may include one or more communication processors that are operable independently from the processor 1820 (e.g., the application processor (AP)) and supports a direct (e.g., wired) communication or a wireless communication. According to an embodiment, the communication module 1890 may include a wireless communication module 1892 (e.g., a cellular communication module, a short-range wireless communication module, or a global navigation satellite system (GNSS) communication module) or a wired communication module 1894 (e.g., a local area network (LAN) communication module or a power line communication (PLC) module). A corresponding one of these communication modules may communicate with the external electronic device via the first network 1898 (e.g., a short-range communication network, such as Bluetooth^{™}, wireless-fidelity (Wi-Fi) direct, or infrared data association (IrDA)) or the second network 1899 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1892 may identify and authenticate the electronic device 1801 in a communication network, such as the first network 1898 or the second network 1899, using subscriber information (e.g., international mobile subscriber identity (IMSI)) stored in the subscriber identification module 1896.

The wireless communication module 1892 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1892 may support a high-frequency band (e.g., the mmWave band) to achieve, e.g., a high data transmission rate. The wireless communication module 1892 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1892 may support various requirements specified in the electronic device 1801, an external electronic device (e.g., the electronic device 1804), or a network system (e.g., the second network 1899). According to an embodiment, the wireless communication module 1892 may support a peak data rate (e.g., 20Gbps or more) for implementing eMBB, loss coverage (e.g., 1864dB or less) for implementing mMTC, or U-plane latency (e.g., 0.5ms or less for each of downlink (DL) and uplink (UL), or a round trip of 18ms or less) for implementing URLLC.

The antenna module 1897 may transmit or receive a signal or power to or from the outside (e.g., the external electronic device) of the electronic device 1801. According to an embodiment, the antenna module 1897 may include an antenna including a radiating element composed of a conductive material or a conductive pattern formed in or on a substrate (e.g., a printed circuit board (PCB)). According to an embodiment, the antenna module 1897 may include a plurality of antennas (e.g., array antennas). In such a case, at least one antenna appropriate for a communication scheme used in the communication network, such as the first network 1898 or the second network 1899, may be selected, for example, by the communication module 1890 (e.g., the wireless communication module 1892) from the plurality of antennas. The signal or the power may then be transmitted or received between the communication module 1890 and the external electronic device via the selected at least one antenna. According to an embodiment, another component (e.g., a radio frequency integrated circuit (RFIC)) other than the radiating element may be additionally formed as part of the antenna module 1897.

According to various embodiments, the antenna module 1897 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1801 and the external electronic device 1804 via the server 1808 coupled with the second network 1899. Each of the electronic devices 1802 or 1804 may be a device of a same type as, or a different type, from the electronic device 1801. According to an embodiment, all or some of operations to be executed at the electronic device 1801 may be executed at one or more of the external electronic devices 1802, 1804, or 1808. For example, if the electronic device 1801 should perform a function or a service automatically, or in response to a request from a user or another device, the electronic device 1801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1801. The electronic device 1801 may provide the outcome, with or without further processing of the outcome, as at least part of a reply to the request. To that end, a cloud computing, distributed computing, mobile edge computing (MEC), or client-server computing technology may be used, for example. The electronic device 1801 may provide ultra low-latency services using, e.g., distributed computing or mobile edge computing. In another embodiment, the external electronic device 1804 may include an internet-of-things (IoT) device. The server 1808 may be an intelligent server using machine learning and/or a neural network. According to an embodiment, the external electronic device 1804 or the server 1808 may be included in the second network 1899. The electronic device 1801 may be applied to intelligent services (e.g., smart home, smart city, smart car, or healthcare) based on 5G communication technology or IoT-related technology.

As described above, an electronic device 101 may comprise a first housing 160, a hinge structure, a second housing 180 rotatable with respect to the first housing 160 via the hinge structure, a flexible display 140 comprising a display area, which includes a first display area 141 on the first housing 160 and a second display area 142 on the second housing 180 extending from the first display area 141 and rotatable with respect to the first display area 141 according to a rotation of the second housing 180, at least one sensor 130, and a processor 120. According to an embodiment, the processor 120 may be configured to display, via the display area, a first window (e.g., view) having a first size. According to an embodiment, the processor 120 may be configured to, while the first window having the first size is displayed, identify, via the at least one sensor, change of an angle between the first housing and the second housing, the change of the angle larger than a threshold angle. According to an embodiment, the processor 120 may be configured to, maintain displaying the first window having the first size, based on the change of the angle performed during a first time duration longer than or equal to a reference time duration. According to an embodiment, the processor 120 may be configured to display, via the display area, the first window having a second size smaller than the first size and a second window associated with the first window, based on the change of the angle performed during a second time duration shorter than the reference time duration.

According to an embodiment, the processor 120 may be configured to identify the change of the angle, based on obtaining, from the at least one sensor 130, data indicating that the angle is changed from a first angle to a second angle different from the first angle and is changed from the second angle to a third angle.

According to an embodiment, the first window and the second window may be provided through a software application.

According to an embodiment, the first window having the second size may be displayed via the first display area 141. According to an embodiment, the second window may be displayed via the second display area 142.

According to an embodiment, the processor 120 may be configured to maintain displaying the first window having the first size, based on the change of the angle smaller than or equal to the threshold angle.

According to an embodiment, the first window may include a webpage. According to an embodiment, the second window may include executable objects for respectively displaying webpages different from the webpage.

According to an embodiment, the second window may further include a text input portion for a search function, and a content on a predetermined webpage.

According to an embodiment, the first window may include text written in a first language. According to an embodiment, the second window may include the text translated from the first language to a second language.

According to an embodiment, the first window may include a webpage. According to an embodiment, the second window may include executable objects for respectively displaying webpages that were displayed before the webpage.

According to an embodiment, the first window having the first size may include text and an image. According to an embodiment, the first window having the second size may include the text among the text and the image. According to an embodiment, the second window may include the image among the text and the image.

According to an embodiment, the processor 120 may be configured to obtain, via the at least one sensor 130, data indicating that a posture of the first housing 160 after the change of the angle is performed corresponds to a reference posture. According to an embodiment, the processor 120 may be configured to, based on the data and the change of the angle during the second time duration, display the first window having the second size via the second display area 142 and display the second window via the first display area 141.

According to an embodiment, the processor 120 may be configured to obtain, via the at least one sensor 130, another data indicating that the posture of the first housing 160 is different from the reference posture. According to an embodiment, the processor 120 may be configured to, based on the other data and the change of the angle during the second time duration, display the first window having the second size via the second display area 142, refrain from displaying the second window via the first display area 141, and maintain displaying the first window having the first size.

According to an embodiment, the first window having the first size may include a plurality of visual objects. According to an embodiment, the processor 120 may be configured to, based on the change of the angle performed during the second time duration in a state in which a touch input on a visual object among the plurality of visual objects is maintained, display the first window having the second size and the second window for the visual object.

According to an embodiment, displaying of the visual object may be ceased in the first window having the second size. According to an embodiment, the second window may include the visual object, and at least another visual object associated with the visual object.

According to an embodiment, the processor 120 may be configured to identify whether a content of predetermined type is included in the first window having the first size. According to an embodiment, the processor 120 may be configured to display the first window having the second size and the second window including the content of predetermined type or an executable object for displaying the content of predetermined type, based on the first window having the first size and including the content of predetermined type, and the change of the angle performed during the second time duration. According to an embodiment, the processor 120 may be configured to, based on the first window having the first size and including at least one content of another type different from the predetermined type, and the change of the angle performed during the second time duration, refrain from displaying the first window having the second size and the second window including the content of predetermined type or the executable object, and maintain displaying the first window.

According to an embodiment, the first window having the first size may include, among a first tab for providing a first webpage and a second tab for providing a second webpage, the first webpage provided through the first tab. According to an embodiment, the first window having the second size may include at least a portion of the first webpage. According to an embodiment, the second window may include the second webpage.

According to an embodiment, the processor 120 may be configured to, while the first window having the second size and the second window are concurrently displayed, identify, via the at least one sensor 130, another change of the angle larger than the threshold angle. According to an embodiment, the processor 120 may be configured to maintain concurrently displaying the first window having the second size and the second window, based on the other change of the angle being performed during the first time duration. According to an embodiment, the processor 120 may be configured to identify whether an additional window is available, based on the other change of the angle being performed during the second time duration. According to an embodiment, the processor 120 may be configured to maintain concurrently displaying the first window having the second size and the second window, based on identifying that the additional window according to the other change of the angle performed during the second time duration is unavailable. According to an embodiment, the processor 120 may be configured to, based on identifying that the additional window is available, display a third window with the first window having the second size and the second window having a reduced size, or display the third window with the first window having a third size smaller than the second size and the second window.

According to an embodiment, the electronic device 101 may comprise a display 150 disposed on a second side of the first housing 160 opposite to a first side of the first housing 160 on which the first display area 141 is disposed. According to an embodiment, the first window may include a webpage. According to an embodiment, the processor 120 may be configured to, while the electronic device is in a first state in which the first display area 141 and the second display area 142 overlap each other, display, via the display, executable objects for respectively indicating webpages including the webpage. According to an embodiment, the processor 120 may be configured to receive an input indicating to select an executable object indicating the webpage among the executable objects. According to an embodiment, the processor 120 may be configured to, after the input is received, identify, via the at least one sensor 130, that a state of the electronic device is changed from the first state to a second state in which the first display area 141 and the second display area 142 form a surface. According to an embodiment, the processor 120 may be configured to, display, via the display area, the first window having the first size and including the webpage, based on changing from the first state to the second state and the input.

According to an embodiment, the processor 120 may be configured to, while the first window having the first size is displayed, identify, via the at least one sensor 130, that the state of the electronic device is changed from the second state to the first state. According to an embodiment, the processor 120 may be configured to, display, via the display, title information of the webpage, based on changing from the second state to the first state.

According to an embodiment, the webpage may include a video and text. According to an embodiment, the angle in each of the first state and the second state may be outside a predetermined range. According to an embodiment, the processor 120 may be configured to, after the input is received, identify that a state of the electronic device is changed from the first state to a third state in which the angle is within the predetermined range. According to an embodiment, the processor 120 may be configured to, display, via the display area, among the video and the text, the first window including the text and having the second size, and the second window including the video, based on changing from the first state to the third state and the input.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1840) including one or more instructions that are stored in a storage medium (e.g., internal memory 1836 or external memory 1838) that is readable by a machine (e.g., the electronic device 1801). For example, a processor (e.g., the processor 1820) of the machine (e.g., the electronic device 1801) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a first housing (160);
a hinge structure;
a second housing (180) rotatable with respect to the first housing (160) via the hinge structure;
a flexible display (140) comprising a display area, the display area including:
a first display area (141) on the first housing (160), and a second display area (142) on the second housing (180), extending from the first display area (141), rotatable with respect to the first display area (141) according to a rotation of the second housing (180);
at least one sensor (130); and
a processor (120) configured to:
display, via the display area, a first window having a first size;
while the first window having the first size is displayed, identify, via the at least one sensor (130), change of an angle between the first housing (160) and the second housing (180), the change of the angle larger than a threshold angle;
based on the change of the angle performed during a first time duration longer than or equal to a reference time duration, maintain displaying the first window having the first size; and
based on the change of the angle performed during a second time duration shorter than the reference time duration, display, via the display area, the first window having a second size smaller than the first size and a second window associated with the first window.

2. The electronic device of claim 1, wherein the processor (120) is configured to:
based on obtaining, from the at least one sensor (130), data indicating that the angle is changed from a first angle to a second angle different from the first angle and is changed from the second angle to a third angle, identify the change of the angle.

3. The electronic device of any one of the preceding claims, wherein the first window having the second size is displayed via the first display area (141), and
wherein the second window is displayed via the second display area (142).

4. The electronic device of any one of the preceding claims, wherein the first window includes a webpage, and
wherein the second window includes executable objects for respectively displaying webpages different from the web page.

5. The electronic device of any one of the preceding claims, wherein the second window further includes a text input portion for a search function, and a content on a predetermined webpage.

6. The electronic device of any one of the preceding claims, wherein the first window includes text written in a first language, and
wherein the second window includes the text translated from the first language to a second language.

7. The electronic device of any one of the preceding claims, wherein the first window includes a webpage, and
wherein the second window includes executable objects for respectively displaying webpages that were displayed before the webpage.

8. The electronic device of any one of the preceding claims, wherein the first window having the first size includes text and an image,
wherein the first window having the second size includes the text among the text and the image, and
wherein the second window includes the image among the text and the image.

9. The electronic device of any one of the preceding claims, wherein the processor (120) is configured to:
obtain, via the at least one sensor (130), data indicating that a posture of the first housing (160) being after the change of the angle is performed corresponds to a reference posture; and
based on the data, and the change of the angle during the second time duration:
display, via the second display area (142), the first window having the second size, and
display, via the first display area (141), the second window.

10. The electronic device of any one of the preceding claims, wherein the processor (120) is further configured to:
obtain, via the at least one sensor (130), another data indicating that the posture of the first housing (160) is different from the reference posture; and
based on the other data, and the change of the angle during the second time duration:
refrain from displaying the first window having the second size via the second display area (142) and displaying the second window via the first display area (141), and
maintain displaying the first window having the first size.

11. The electronic device of any one of the preceding claims, wherein the first window having the first size includes a plurality of visual objects, and
wherein the processor (120) is configured to:
based on the change of the angle performed during the second time duration in a state in which a touch input on a visual object among the plurality of visual objects is maintained, display the first window having the second size and the second window for the visual object.

12. The electronic device of any one of the preceding claims, wherein displaying of the visual object is ceased in the first window having the second size, and
wherein the second window includes the visual object, and at least another visual object associated with the visual object.

13. The electronic device of any one of the preceding claims, wherein the processor (120) is configured to:
identify whether a content of predetermined type is included in the first window having the first size;
based on the first window, having the first size, including the content of predetermined type, and the change of the angle performed during the second time duration, display the first window having the second size and the second window including the content of predetermined type or an executable object for displaying the content of predetermined type; and
based on the first window, having the first size, including at least one content of another type different from the predetermined type, and the change of the angle performed during the second time duration:
refrain from displaying the first window having the second size and the second window including the content of predetermined type or the executable object, and
maintain displaying the first window.

14. The electronic device of any one of the preceding claims, wherein the first window having the first size includes, among a first tab for providing a first webpage and a second tab for providing a second webpage, the first webpage provided through the first tab,
wherein the first window having the second size includes at least a portion of the first webpage, and
wherein the second window includes the second webpage.

15. The electronic device of any one of the preceding claims, wherein the processor is configured to:
while the first window having the second size and the second window are concurrently displayed, identify, via the at least one sensor (130), another change of the angle larger than the threshold angle;
based on the other change of the angle being performed during the first time duration, maintain concurrently displaying the first window having the second size and the second window;
based on the other change of the angle being performed during the second time duration, identify whether an additional window is available;
based on identifying that the additional window according to the other change of the angle performed during the second time duration is unavailable, maintain concurrently displaying the first window having the second size and the second window; and
based on identifying that the additional window is available, display, via the display area, a third window with the first window having the second size and the second window having a reduced size, or display the third window with the first window having a third size smaller than the second size and the second window.
